# EUROPEAN PATENT SPECIFICATION

(11) **EP 1 647 095 B1**
(45) Date of publication and mention of the grant of the patent: **12.12.2007**
(21) Application number: 04744465.8
(22) Date of filing: 01.07.2004
(51) Int. Cl.: H04B 1/26

(54) **RECEIVER FOR RECEIVING FREQUENCY SIGNALS USING DELTA-SIGMA MODULATORS**
EMPFÄNGER ZUM EMPFANG VON FREQUENZSIGNALEN UNTER VERWENDUNG VON DELTA-SIGMA-MODULATOREN
RECEPTEUR POUR RECEVOIR DES SIGNAUX DE FREQUENCE AU MOYEN DE MODULATEURS DELTA-SIGMA

(30) Priority: 10.07.2003 EP 03102094
(43) Date of publication of application: 19.04.2006
(73) Proprietor: NXP B.V., 5656 AG Eindhoven (NL)
(72) Inventor: WETZKER, Gunnar, NL-5656 AA Eindhoven (NL); LEENAERTS, Dominicus, M., W., NL-5656 AA Eindhoven (NL)
(74) Representative: Pennings, Johannes
(86) International application number: PCT/IB2004/051096
(87) International publication number: WO 2005/006580

(56) References cited:
- EP-A- 1 168 639
- US-A- 6 005 506
- US-B1- 6 218 972
- US-B1- 6 584 157
- US-B1- 6 590 943

## Description

The invention relates to a receiver for receiving frequency signals, to a system comprising a receiver for receiving frequency signals and a transmitter, to a modulating/filtering stage for use in a receiver, and to a method and to a processor program product for receiving frequency signals.

The frequency signals for example comprise modulated radio frequency signals or modulated intermediate frequency signals etc. Examples of such a receiver are interfaces for wireless networks like Local Area Networks, Bluetooth interfaces and Digital European Cordless Telecommunication interfaces etc. Examples of such a system are Local Area Network terminals, Bluetooth terminals, Digital European Cordless Telecommunication terminals, mobile phones, audio/video terminals etc.

A prior art receiver is known from US 2002/0123319 A1, which discloses in its Fig. 8 an antenna (801) and two branches each comprising a mixer (840), an analogue filter (870) serving as an anti-aliasing filter for the following analog-to-digital converter being a Nyquist AD converter, a DC control loop consisting of a DC error signal generation block (901) and a digital-to-analog converter (925), and a decimator (910), with only one of the branches being shown. For high rejecting of image frequencies, both branches require a high matching. The filtering of the frequency band in which the wanted channel is located cannot be done in the digital domain, unless the accuracy of the analog-to-digital converter in the Nyquist dc-cancellation loop is increased a lot (by introducing many extra bits for additional dynamic range required by signals on adjacent channels) and the sampling frequency of the analog-to-digital converter and the bandwidth of the anti-aliasing filter are much higher than the bandwidth of the transmitted signal. This increases the power dissipation. Further, the dc-cancellation loop does not shape the quantisation noise out of the frequency band in which the wanted channel is located.

The known receiver is disadvantageous, inter alia, due to not shaping the quantisation noise out of the frequency band in which the wanted channel is located.

Another prior art receiver is known from US-A-6590943, which discloses a receiver where the signals are sigma-delta modulated after having been filtered.

It is an object of the invention, inter alia, of providing a receiver, which shapes the quantisation noise out of the frequency band in which the wanted channel is located.

Furthers objects of the invention are, inter alia, providing a system comprising a receiver which shapes the quantisation noise out of the frequency band in which the wanted channel is located and a transmitter, a modulating/filtering stage for use in a receiver which shapes quantisation noise out of the frequency band in which the wanted channel is located, and a method and a processor program product for receiving frequency signals while shaping the quantisation noise out of the frequency band in which the wanted channel is located.

The receiver according to the invention comprises
- a receiving stage for receiving frequency signals;
- a mixing stage coupled to the receiving stage for generating converted frequency signals;
- a modulating stage coupled to the mixing stage for delta-sigma modulating the converted frequency signals; and
- a filtering stage coupled to the modulating stage for filtering the delta-sigma modulated converted frequency signals.

By introducing the modulating stage between the mixing stage and the filtering stage for delta-sigma modulating the converted frequency signals, the quantisation noise is shaped out of the frequency band in which the wanted channel is located. Further, with delta-sigma modulating being done through a feedback loop, the receiver according to the invention is less critical than receivers comprising a Nyquist AD converter embedded in a dc-cancellation loop, due to these Nyquist AD converters being embedded in a dc-cancellation loop only feeding back dc-components of a signal and not feeding back the quantised signal. While delta-sigma modulating, dc-components are not fed back, but the quantised signal is fed back. The mixing stage converts frequency signals into converted frequency signals, with the frequency signals for example being radio frequency signals and with the converted frequency signals being intermediate frequency signals or baseband signals, or with the frequency signals for example being radio frequency signals or intermediate frequency signals and with the converted frequency signals being baseband signals etc.

A first embodiment of the receiver according to the invention is defined by the modulating stage comprising a delta-sigma modulator, which comprises
- a low-pass filter;
- a quantiser coupled to the low-pass filter; and
- a digital-to-analog converter for feeding back an output of the quantiser to an input of the low-pass filter.

The delta-sigma modulator for example further comprises a subtractor for subtracting an output signal of the digital-to-analog converter from an input signal and generating an output signal to be supplied to the input of the low-pass filter. A sampler (the delta-sigma modulator requires a relatively high oversample factor) is either situated between the low-pass filter and the quantiser, or forms part of this quantiser. The quantiser and the digital-to-analog converter do not need to have the high accuracy of the Nyquist AD converter embedded in the dc-cancellation loop (by using only a low number of bits), which results in a low power dissipation. The matching specifications for the low-pass filter are much easier to achieve than for the anti-aliasing filter of the Nyquist AD converter concept. Since the filter is part of the loop, only difference signals have to be processed. Especially in case of the frequency band where the wanted signals are located, these differences are small. This simplifies dynamic range requirements within this frequency band making it a lot easier to achieve a higher matching between I and Q branch. Further, digital-to-analog converters are easier to be made than analog-to-digital converters.

A second embodiment of the receiver according to the invention is defined by the low-pass filter comprising a time-continuous filter. As a result, any anti-aliasing filtering, as present in the Nyquist AD converter embedded in the dc-cancellation loop, no longer is necessary. This is an advantage due to anti-alias filters being difficult to match between different branches.

A third embodiment of the receiver according to the invention is defined by the receiver further comprising
- a further mixing stage coupled to the filtering stage for generating baseband signals; and
- a further filtering stage coupled to the further mixing stage for channel selective filtering the baseband signals.

In this case, the frequency signals are radio frequency signals, with the converted frequency signals being intermediate frequency signals. Preferably, the further filtering stage is a digital stage, and further preferably, the further mixing stage is also a digital stage. Compared to an analog version, a digital stage is easier to make and offers more options and does not depend on varying accuracies of analog components.

A fourth embodiment of the receiver according to the invention is defined by the mixing stage comprising a mixer, with the modulating stage comprising a delta-sigma modulator. This embodiment is of the lowest complexity.

A fifth embodiment of the receiver according to the invention is defined by the mixing stage comprising a first mixer for generating in-phase signals and a second mixer for generating quadrature signals, with the modulating stage comprising a first delta-sigma modulator for delta-sigma modulating the in-phase signals and a second delta-sigma modulator for delta-sigma modulating the quadrature signals. This embodiment allows the use of in-phase and quadrature signals.

The system according to the invention comprises a transmitter and comprises a receiver comprising
- a receiving stage for receiving frequency signals;
- a mixing stage coupled to the receiving stage for generating converted frequency signals;
- a modulating stage coupled to the mixing stage for delta-sigma modulating the converted frequency signals; and
- a filtering stage coupled to the modulating stage for filtering the delta-sigma modulated converted frequency signals.

The transmitter for example comprises a mixing stage and an amplifying stage.

The modulating/filtering stage for use in a receiver comprises
- a receiving stage for receiving frequency signals;
- a mixing stage coupled to the receiving stage for generating converted frequency signals;
- the modulating/filtering stage comprising a modulating stage coupled to the mixing stage for delta-sigma modulating the converted frequency signals and a filtering stage coupled to the modulating stage for filtering the delta-sigma modulated converted frequency signals.

The filtering stage for example firstly reduces the bandwidth of the signal to be filtered to fs/(2K) through low-pass filtering, with the bandwidth being defined from 0 Hz to the maximum frequency of the signal, with fs being the sampling frequency of the modulating stage and with K being a decimation factor, before secondly the sampling rate of the signal is reduced by taking every Kth symbol.

Embodiments of the system according to the invention and of the modulating/filtering stage according to the invention and of the method according to the invention and of the processor program product according to the invention correspond with the embodiments of the receiver according to the invention.

The invention is based upon an insight, inter alia, that a Nyquist AD converter embedded in a dc-cancellation loop does not shape the quantisation noise out of the frequency band in which the wanted channel is located, and is based upon a basic idea, inter alia, that a delta-sigma modulating stage shapes the quantisation noise out of the frequency band in which the wanted channel is located.

The invention solves the problem, inter alia, of providing a receiver, which shapes the quantisation noise out of the frequency band in which the wanted channel is located, and is advantageous, inter alia, in that the receiver according to the invention is less critical.

These and other aspects of the invention will be apparent from and elucidated with reference to the embodiments(s) described hereinafter.

In the drawings:
Fig. 1 shows in block diagram form a receiver according to the invention comprising a modulating/filtering stage according to the invention with one delta-sigma modulator;
Fig. 2 shows in block diagram form a receiver according to the invention comprising a modulating/filtering stage according to the invention with two delta-sigma modulators for delta-sigma modulating in-phase and quadrature signals;
Fig. 3 shows in block diagram form a delta-sigma modulator for use in a receiver according to the invention;
Fig. 4 shows in block diagram form a system according to the invention comprising a receiver according to the invention and a transmitter; and
Fig. 5 shows in block diagram form a part of the receiver according to the invention provided with a time-control loop.

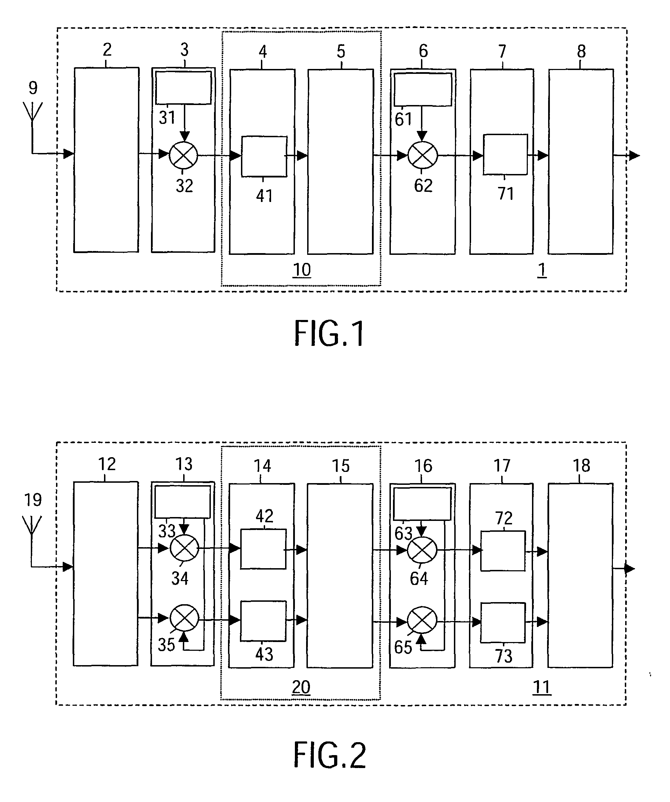

The receiver 1 according to the invention shown in Fig. 1 like for example an interface for wireless networks like Local Area Networks, a Bluetooth interface or a Digital European Cordless Telecommunication interface etc. comprises a receiving stage 2 for receiving radio frequency signals via an antenna 9. A mixing stage 3 is coupled to the receiving stage 2 for generating intermediate frequency signals. A modulating stage 4 is coupled to the mixing stage 3 for delta-sigma modulating the intermediate frequency signals. A filtering stage 5 is coupled to the modulating stage 4 for filtering the delta-sigma modulated intermediate frequency signals. A further mixing stage 6 is coupled to the filtering stage 5 for generating baseband signals, and a further filtering stage 7 is coupled to the further mixing stage 6 for channel selective filtering the baseband signals. A transformation and processing stage 8 is coupled to the further filtering stage 7 and generates information symbols.

The receiving stage 2 for example comprises an antenna filter and a low noise amplifier. The mixing stage 3 comprises a mixer 32 coupled to an oscillator 31 for example comprising a Voltage Controlled Oscillator and/or a Phase Locked Loop. The modulating stage 4 comprises a delta-sigma modulator 41. The filtering stage 5 for example comprises a decimator for reducing the bandwidth of the signal to be filtered to fs/(2K), with fs being the sampling frequency of the modulating stage 4 and with K being a decimation factor, before the sampling rate of the signal is reduced by taking every Kth symbol. The further mixing stage 6 comprises a mixer 62 coupled to an oscillator 61 for example comprising a Voltage Controlled Oscillator and/or a Phase Locked Loop. The further filtering stage 7 comprises a channel selective filter 71. The transformation and processing stage 8 for example comprises a transformator and a non-coherent receiving unit comprising a differentiator and an equaliser. Modulating stage 4 and filtering stage 5 together form a modulating/filtering stage 10.

The receiver 11 according to the invention shown in Fig. 2 like for example an interface for wireless networks like Local Area Networks, a Bluetooth interface or a Digital European Cordless Telecommunication interface etc. comprises a receiving stage 12 for receiving radio frequency signals via an antenna 19. A mixing stage 13 is coupled to the receiving stage 12 for generating intermediate frequency signals. A modulating stage 14 is coupled to the mixing stage 13 for delta-sigma modulating the intermediate frequency signals. A filtering stage 15 is coupled to the modulating stage 14 for filtering the delta-sigma modulated intermediate frequency signals. A further mixing stage 16 is coupled to the filtering stage 15 for generating baseband signals, and a further filtering stage 17 is coupled to the further mixing stage 16 for channel selective filtering the baseband signals. A transformation and processing stage 18 is coupled to the further filtering stage 17 and generates information symbols.

The receiving stage 12 for example comprises an antenna filter and a low noise amplifier. The mixing stage 13 comprises a first mixer 34 for generating in-phase signals and a second mixer 35 for generating quadrature signals both coupled to an oscillator 33 for example comprising a Voltage Controlled Oscillator and/or a Phase Locked Loop. The modulating stage 14 comprises a first delta-sigma modulator 42 coupled to first mixer 34 for delta-sigma modulating the in-phase signals and a second delta-sigma modulator 43 coupled to a second mixer 35 for delta-sigma modulating the quadrature signals. The filtering stage 15 for example comprises decimators for reducing the bandwidth of the signal to be filtered to fs/(2K), with fs being the sampling frequency of the modulating stage 14 and with K being a decimation factor, before the sampling rate of the signal is reduced by taking every Kth symbol. The further mixing stage 16 comprises a first mixer 64 and a second mixer 65 both coupled to an oscillator 63 for example comprising a Voltage Controlled Oscillator and/or a Phase Locked Loop. The further filtering stage 17 comprises a first channel selective filter 72 coupled to first mixer 64 and a second channel selective filter 73 coupled to second mixer 65. The transformation and processing stage 8 for example comprises a transformator and a non-coherent Gaussian Frequency Shift Keying receiving unit comprising a differentiator and an equaliser, or a Phase Shift Keying or Quadrature Amplitude Modulation demodulating unit, or a coherent Gaussian Minimum Shift Keying demodulating unit. Modulating stage 14 and filtering stage 15 together form a modulating/filtering stage 20.

By introducing the modulating stage 4,14 between the mixing stage 3,13 and the filtering stage 5,15 for delta-sigma modulating the intermediate frequency signals, the quantisation noise is shaped out of the frequency band in which the wanted channel is located. Due to delta-sigma modulating being done through a feedback loop, the receiver 1,11 is less critical than prior art receivers comprising Nyquist dc-cancellation loops as defined in US 2002/0123319 A1, due to these Nyquist de-cancellation loops only feeding back dc-components of a signal and not feeding back the entire signal. While delta-sigma modulating, dc-components are not fed back, but the entire signal is fed back. Alternatively to applying two mixing stages 3,6,13,16, one mixing stage comprising both mixing stages or just one of them may be applied. Preferably, the further filtering stage 7,17 is a digital stage, and further preferably, the further mixing stage 6,16 is also a digital stage. Automatic gain control (not shown) can now also be done in the digital domain advantageously.

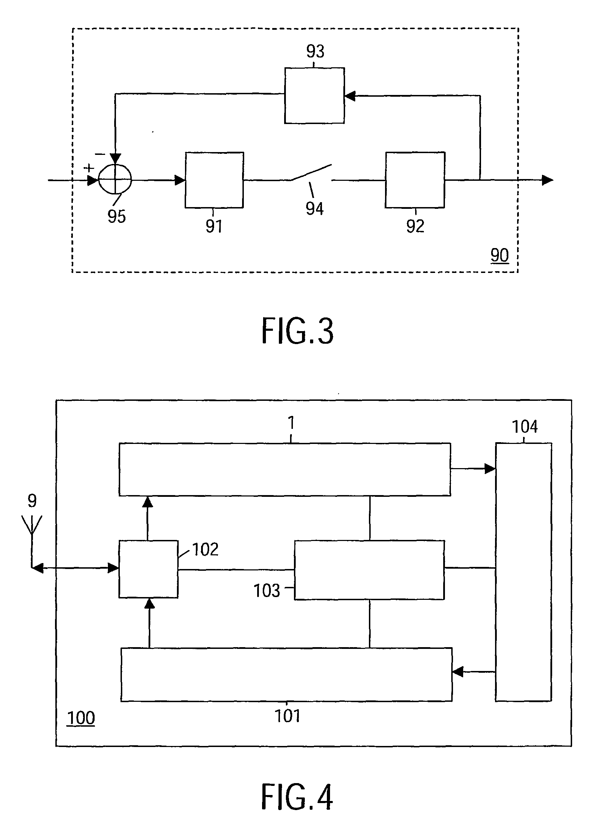

The delta-sigma modulating stage 90 shown in Fig. 3 corresponds with the delta-sigma modulators 41,42,43 shown in Fig. 1 and 2 and comprises a low-pass filter 91, a quantiser 92 coupled to the low-pass filter 91 via a sampler 94 with a sampling frequency fs, and a digital-to-analog converter 93 for feeding back an output of the quantiser 92 to an input of the low-pass filter 91 via a subtracter 95. The subtracter 95 subtracts an output signal of the digital-to-analog converter 93 from an input signal originating from a mixer 32,34,35 and generates an output signal to be supplied to the input of the low-pass filter 91. The sampler 94 (the delta-sigma modulator 90 requires a relatively high oversample factor) may alternatively form part of the quantiser 92. The quantiser 92 and the digital-to-analog converter 93 do not need to have the high accuracy of the analog-to-digital converter in the prior art Nyquist AD converter embedded in a dc-cancellation loop (by using only a low number of bits), which results in a low power dissipation.

Preferably, the low-pass filter 91 comprises a time-continuous filter. As a result, any anti-aliasing filtering, as present in the prior art Nyquist AD converter embedded in the dc-cancellation loop, no longer is necessary. This is an advantage due to anti-aliasing filters being difficult to match due to higher dynamic range requirements.

The system 100 according to the invention like for example a Local Area Network terminal, a Bluetooth terminal, a Digital European Cordless Telecommunication terminal, a mobile phone, an audio/video terminal etc. comprises a transmitter 101 and a receiver 1 (or 11). An antenna 9 (or 19) is coupled to an in/output of a duplexer 102, of which an output is coupled to receiver 1 and of which an input is coupled to transmitter 101. An output of receiver 1 is coupled to an input of a man-machine-interface 104 or mmi 104, and an input of transmitter 101 is coupled to an output of mmi 104. A processor 103 is coupled to receiver 1, transmitter 101, duplexer 102 and mmi 104 for controlling purposes. Alternatively, instead of duplexer 102, a switch etc. may be used. Further alternatively, receiver 1 and transmitter 101 may use their own individual antenna, without a duplexer 102 or a switch being present. Mmi 104 for example comprises a display and/or a keyboard and/or a loudspeaker and/or a microphone etc.

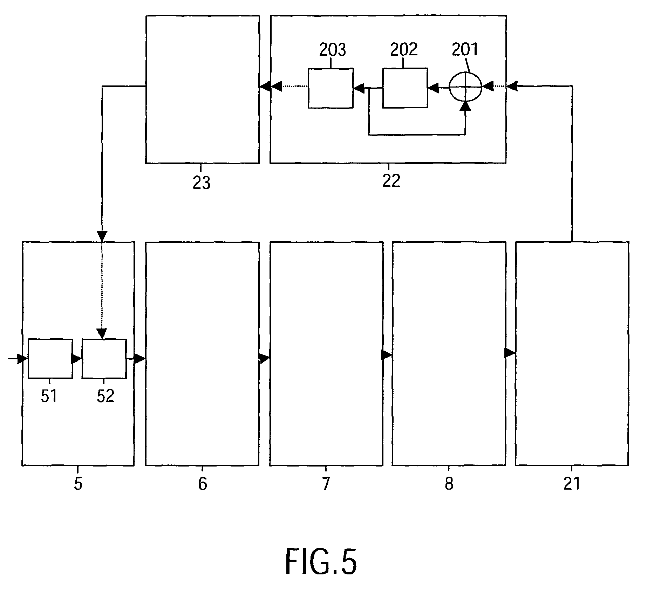

The part of the receiver 1 (or 11) according to the invention shown in Fig. 5 comprises the filtering stage 5 (or 15) and the further mixing stage 6 or (16) and the further filtering stage 7 (or 17) and the transformation and processing stage 8 (or 18). The part of the receiver 1 (or 11) is provided with a detector 21 for firstly detecting a zero-crossing and for secondly detecting a sampling instant error, and is provided with a time-control loop 22,23 comprising a loop filter 22 coupled to an output of the detector 21 and a quantiser 23 coupled to an output of the loop filter 22 and to an input of the filtering stage 5 (or 15).

The filtering stage 5 (or 15) comprises a low-pass filter 51 for filtering an output signal generated by modulating stage 4 (or 14) and a decimator 52 controlled by an output signal generated by the quantiser 23 for decimating an output signal generated by low-pass filter 51. Only one combination 51,52 is shown, possibly there may be two or more. The loop filter 22 comprises an adder 201 of which a first input constitutes an input of the loop filter 22 and of which an output is coupled to an input of a z⁻¹ block 202, of which an output is coupled to a second input of the adder 201 and to an input of a gain block 203, of which an output constitutes the output of the loop filter 22.

In case of the Gaussian Frequency Shift Keying situation, the transformation and processing stage 8 (or 18) calculates a phase and a derivative of the phase of an incoming signal generated by the further filtering stage 7 (or 17) and optionally performs an equalisation. The detector 21 detects zero-crossings and sampling instant errors in the output signal generated by the transformation and processing stage 8 (or 18). Loop filter 22 averages these sampling instant errors. Thereto, the transfer function of loop filter 22 is H(z) = g • z/(z-1), with g being a gain generated by gain block 203. This gain g must be such that the time-control loop is stable and converging. Preferably, the gain g is adjusted such that for rough estimations the gain g has a larger value (fast but less accurate loop) and for more precise estimations the gain g has a smaller value (slow but more accurate loop). The quantiser 23 quantises an output signal of the loop filter 22 into a value in a range from one to K, where one corresponds with a sampling error of -T/(2K) and K corresponds with a sampling error of T(0.5-1/K). If the output signal of the loop filter 22 is above T(0.5-1/K) or below of -T/(2K), the quantiser 23 must wrap around instead of clipping (in case of wrapping around, when exceeding the maximum value, the quantiser continues with the mimimum value, and vice versa). The decimator 52 for example comprises a multiplexer having K inputs receiving subsequent samples of the output signal generated by low-pass filter 51. These samples are 1/fs separated from each other (sampling frequency fs). In response to the output signal generated by the quantiser 23 and having a value of 1....K, the corresponding input of the multiplexer is selected and coupled to the output of the multiplexer, resulting in an output signal at a frequency fs/K. Due to the high time resolution available at the sigma delta modulator output, with the time-control loop 22,23 an optimum sampling instant can be tracked digitally without complex additional hardware for interpolation between samples being necessary.

Other filtering stages 5 (or 15) comprising for example a low-pass filter, a decimator and another low-pass filter are not to be excluded. In case of another situation like the Phase Shift Keying situation or the Quadrature Amplitude Modulation situation of the Gaussian Minimum Shift Keying situation, the content of the transformation and processing stage 8 (or 18) may vary without departing from the scope of this invention.

The expression "for" in for example "for A" and "for B" does not exclude that other functions "for C" are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention is based upon an insight, inter alia, that Nyquist dc-cancellation loops do to not shape the quantisation noise out of the frequency band in which the wanted channel is located, and is based upon a basic idea, inter alia, that a delta-sigma modulating stage shapes the quantisation noise out of the frequency band in which the wanted channel is located.

The invention solves the problem, inter alia, of providing a receiver, which shapes the quantisation noise out of the frequency band in which the wanted channel is located, and is advantageous, inter alia, in that the receiver according to the invention is less critical.

## Claims

1. Receiver (1,11) comprising:
- a receiving stage (2,12) for receiving frequency signals;
- a mixing stage (3,13) coupled to the receiving stage (2,12) for generating converted frequency signals;
- a modulating stage (4,14) coupled to the mixing stage (3,13) for delta-sigma modulating the converted frequency signals; and
- a filtering stage (5,15) coupled to the modulating stage (4,14) for filtering the delta-sigma modulated converted frequency signals.

2. Receiver (1,11) as defined by claim 1, wherein the modulating stage (4,14) comprises a delta-sigma modulator (41,42,43,90) comprising:
- a low-pass filter (91);
- a quantiser (92) coupled to the low-pass filter (91); and
- a digital-to-analog converter (93) for feeding back an output of the quantiser (92) to an input of the low-pass filter (91).

3. Receiver (1,11) as defined by claim 2, wherein the low-pass filter (91) comprises a time-continuous filter.

4. Receiver (1,11) as defined by claim 1, further comprising:
- a further mixing stage (6,16) coupled to the filtering stage (5,15) for generating baseband signals; and
- a further filtering stage (7,17) coupled to the further mixing stage (6,16) for channel selective filtering the baseband signals.

5. Receiver (1) as defined by claim 1, wherein the mixing stage (3) comprises a mixer (32), and the modulating stage comprises a delta-sigma modulator (41).

6. Receiver (11) as defined by claim 1, wherein the mixing stage (13) comprises a first mixer (34) for generating in-phase signals and a second mixer (35) for generating quadrature signals, and the modulating stage (14) comprises a first delta-sigma modulator (42) for delta-sigma modulating the in-phase signals and a second delta-sigma modulator (43) for delta-sigma modulating the quadrature signals.

7. System (100) comprising a transmitter (101) and a receiver (1,11) as claimed in claim 1.

## Patentansprüche

1. Empfänger (1, 11) umfassend:
- eine Empfangsstufe (2, 12) zum Empfangen von Frequenzsignalen;
- eine an die Empfangsstufe (2, 12) gekoppelte Mischstufe (3, 13) zum Erzeugen konvertierter Frequenzsignale;
- eine an die Mischstufe (3, 13) gekoppelte Modulationsstufe (4, 14) zum Delta-Sigma-Modulieren der konvertierten Frequenzsignale; und
- eine an die Modulationsstufe (4, 14) gekoppelte Filterstufe (5, 15) zum Filtern der Delta-Sigma-modulierten konvertierten Frequenzsignale.

2. Empfänger (1, 11) nach Anspruch 1, wobei die Modulationsstufe (4, 14) einen Delta-Sigma-Modulator (41, 42, 43, 90) umfasst, der Folgendes umfasst:
- einen Niedrigpassfilter (91);
- einen an den Niedrigpassfilter (91) gekoppelten Quantisierer (92); und
- einen Digital-zu-Analog-Konverter (93) zum Rückführen einer Ausgabe von dem Quantisierer (92) zu einem Eingang des Niedrigpassfilters (91).

3. Empfänger (1,11) nach Anspruch 2, wobei der Niedrigpassfilter (91) einen zeitkontinuierlichen Filter umfasst.

4. Empfänger (1, 11) nach Anspruch 1, ferner umfassend:
- eine weitere an die Filterstufe (5, 15) gekoppelte Mischstufe (6, 16) zum Erzeugen von Basisbandsignalen; und
- eine an die weitere Mischstufe (6, 16) gekoppelte weitere Filterstufe (7,17) zum kanalselektiven Filtern der Basisbandsignale.

5. Empfänger (1) nach Anspruch 1, wobei die Mischstufe (3) einen Mischer (32) umfasst und die Modulationsstufe einen Delta-Sigma-Modulator (41) umfasst.

6. Empfänger (11) nach Anspruch 1, wobei die Mischstufe (13) einen ersten Mischer (34) zum Erzeugen von In-Phase-Signalen und einen zweiten Mischer (35) zum Erzeugen von Quadratursignalen umfasst und die Modulationsstufe (14) einen ersten Delta-Sigma-Modulator (42) zum Delta-Sigma-Modulieren der In-Phasen-Signale und einen zweiten Delta-Sigma-Modulator (43) zum Delta-Sigma-Modulieren der Quadratursignale umfasst.

7. System (100) umfassend einen Sender (101) und einen Empfänger (1,11) nach Anspruch 1.

## Revendications

1. Récepteur (1, 11) comprenant :
- un étage de réception (2, 12) destiné à recevoir des signaux de fréquence;
- un étage de mélange (3, 13) couplé à l'étage de réception (2, 12) destiné à générer des signaux de fréquence convertis ;
- un étage de modulation (4, 14) couplé à l'étage de mélange (3, 13) destiné à moduler delta-sigma les signaux de fréquence convertis ; et
- un étage de filtrage (5, 15) couplé à l'étage de modulation (4, 14) destiné à filtrer les signaux de fréquence convertis modulés delta-sigma.

2. Récepteur (1, 11) tel que défini dans la revendication 1, dans lequel l'étage de modulation (4, 14) comprend un modulateur delta-sigma (41, 42, 43, 90) comprenant :
- un filtre passe-bas (91);
- un quantificateur (92) couplé au filtre passe-bas (91) et
- un convertisseur numérique à analogique (93) destiné à réinjecter une sortie du quantificateur (92) à une entrée du filtre passe-bas (91).

3. Récepteur (1, 11) tel que défini dans la revendication 2, dans lequel le filtre passe-bas (91) comprend un filtre à continuité dans le temps.

4. Récepteur (1, 11) tel que défini dans la revendication 1, comprenant en outre:
- un étage de mélange supplémentaire (6, 16) couplé à l'étage de filtrage (5, 15) pour générer des signaux de bande de base ; et
- un étage de filtrage supplémentaire (7, 17) couplé à l'étage de mélange supplémentaire (6, 16) pour un filtrage sélectif du canal des signaux de bande de base.

5. Récepteur (1) tel que défini dans la revendication 1, dans lequel l'étage de mélange (3) comprend un mélangeur (32), et l'étage de modulation comprend un modulateur delta-sigma (41).

6. Récepteur (11) tel que défini dans la revendication 1, dans lequel l'étage de mélange (13) comprend un premier mélangeur (34) destiné à générer des signaux en phase et un second mélangeur (35) destiné à générer des signaux en quadrature de phase, et l'étage de modulation (14) comprend un premier modulateur delta-sigma (42) destiné à moduler delta-sigma les signaux en phase et un second modulateur delta-sigma (43) destiné à moduler delta-sigma les signaux en quadrature de phase.

7. Système (100) comprenant un émetteur (101) et un récepteur (1, 11) tel que revendiqué dans la revendication 1.
